# EUROPEAN PATENT SPECIFICATION

(11) **EP 2 138 220 B1**
(45) Date of publication and mention of the grant of the patent: **16.04.2014**
(21) Application number: 08703026.8
(22) Date of filing: 09.01.2008
(51) Int. Cl.: B01D 39/16, B01D 29/11, F02M 37/10, F02M 37/22

(54) **FILTER APPARATUS FOR FUEL**
FILTERVORRICHTUNG FÜR KRAFTSTOFF
APPAREIL DE FILTRAGE POUR COMBUSTIBLE

(30) Priority: 10.01.2007 JP 2007002491
(43) Date of publication of application: 30.12.2009
(73) Proprietor: Nifco INC., Yokohama-shi, Kanagawa 244-8522 (JP)
(72) Inventor: OGOSE, Kensuke, Yokohama-shi,Kanagawa 244-8522 (JP)
(74) Representative: Vossius & Partner
(86) International application number: PCT/JP2008/050155
(87) International publication number: WO 2008/084816

(56) References cited:
- EP-A1- 1 502 637
- JP-A- 03 175 141
- JP-A- 08 038 834
- JP-A- 2000 246 026
- JP-A- 2004 301 121
- JP-A- 2005 048 721

## Description

### TECHNICAL FIELD

The present invention relates to an improved fuel filter device, which is adapted to be attached to a fuel suction opening inside in a fuel tank.

### BACKGROUND ART

The fuel inside a fuel tank is forwarded toward an internal combustion engine through a suction pipe disposed inside the fuel tank. In order to remove water and a foreign material from the forwarded fuel for the purpose of preventing such a foreign material from being forwarded into a fuel pump, the fuel tank has a filter device attached to a fuel suction opening of the suction pipe. As such a filter device, a filter device disclosed in Patent Document 1 and its European counterpart EP 1 502 637 has been proposed by the applicant.

The filter device disclosed in Patent Document 1 and its European counterpart EP 1 502 637 includes a bag-like filter member having an inner space communicating with a fuel suction opening inside a fuel tank. Such a bag-like filter member includes an outermost layer, an innermost layer and two layers interposed between the outermost layer and the innermost layer, the outermost layer being formed of a filter medium formed of a mesh fabric, the innermost layer being formed of a spun-bonded non-woven fabric, and the two interposed layers being formed of melt blown non-woven fabrics. The filer member is configured to have such a filter gradient that a melt blown non-woven fabric disposed closer to the innermost layer has a smaller average opening size than the melt blown non-woven fabric disposed closer to the outermost layer. Thus, the filter device is provided with a longer service life by reducing the load of the melt blown non-woven fabric having such a smaller opening size and disposed closer to the innermost layer while dust and dirt having a fine particle size can be captured.

In the filter device configured as described above, when filter media formed of melt blown non-woven fabrics having different average opening size are further stacked to make the filter gradient gently (to reduce the difference in average opening size between adjacent filter media), the filter is provided with a longer service life, having an improved filtering accuracy. However, there is a limitation to the stacking number of the filter media in terms of the production cost of the filter member. Further, it becomes more difficult to properly make the filter member since the number of the filter media required to be melt-bonded at melt-bonded portions in order to make the filter member in a bag-like shape increases as the stacking member of the filter media increases.
Patent Document 1: JP-A-2005-48721

### DISCLOSURE OF THE INVENTION

### PROBLEMS THAT THE INVENTION IS TO SOLVE

A main problem to be solved by the present invention is that it is possible to easily and properly make the filter member in a bag-like shape while the filter member forming such a type of filter device is provided with an improved filtering accuracy and a long service life as much as possible.

### MEANS OF SOLVING THE PROBLEMS

In order to attain the above-mentioned problem, the present invention provides a fuel filter device, which includes a filter member formed in a bag-like shape, and which is adapted to be attached to a fuel suction opening inside a fuel tank so as to communicate an inner space of the filter member with the fuel suction opening; comprising
the filter member being formed by stacking at least two filter media; and
at least one of the filter media being configured that fuel passages in the at least one filter medium have different cross-sectional areas at a primary side and a secondary side of the at least one filter medium in order to serve as a multifunctional filter medium having a function of stepwise capturing dust and dirt having different particle sizes.

In accordance with the filter device, such a single multifunctional filter medium allows dust and dirt having different particle size and ranging from a coarse particle size to a fine particle size to be captured at respective different positions in the thickness direction of the media. Thus, it is possible to properly remove dust and dirt from sucked fuel in such a state that the filter member is hardly clogged.

When the filter member is formed in a bag-like shape by stacking plural melt-bondable filter media formed in a sheet-like or mat-like shape, folding the stacked media and melt-bonding, in a linear form or a band form, the other portions than the folded portion, or when the filter member is formed in a bag-like shape by stacking two combinations of stacked filter media so as to face the inner side of one of the combinations to the Inner side of the other combination, the melt-bonding operation can be carried out easily and properly with the stacking number of the filter media at the melt-bonded portions being minimized.

When the multifunctional filter medium is formed of a medium produced by an air-laid method, it is possible to obtain, at a relatively low cost, the multifunction filter medium as a non-fabric filter media having a smooth density gradient and easy to supply, at a low cost, a filter device which has a high filtering accuracy and is unlikely to be clogged.

When each of the fuel passages in the multifunctional filter medium has a cross-sectional area gradually decreasing toward the secondary side of the multifunctional filter medium, a portion of the multifunctional filter medium closer to the primary side, a portion of the multifunctional filer medium closer to the secondary side and an intermediate portion of the multifunctional filter medium between both sides capture dust and dirt having a relatively coarse particle size, dust and dirt having a relatively fine particle size, and dust and dirt having an intermediate particle size at different positions, respectively.

When the multifunctional filter medium has a melt-blown filter medium stacked on the secondary side wherein the melt-blown filter medium has a smaller average opening size than the multifunctional filter medium, it is possible to provide a long service life to the filter device with the load borne by a main filter being minimized wherein the main filter is formed of the melt-blown filter medium that is easy to decrease the average opening size while the multifunctional filter medium serves as a prefilter.

When a filter medium that is located at an innermost position of the filter member is formed of a filter medium produced by a spun-bond method, it is possible to easily keep the shape of the filter member by giving a rigidity to the filter member by the filter medium located at the innermost position.

When a filter medium that is located at an outermost position of the filter member is formed of a mesh fabric, the mesh fabric allows only the fuel in the fuel tank to enter the filter member.

### EFFECT OF THE INVENTION

In accordance with the present invention, the multifunctional filter medium makes it possible to provide an improved filtering accuracy and a long service life to the filter member forming a filter device as much as possible without having an excessive stacking number of the filter media. Thus, it is possible to easily and properly produce such a filter device at a low cost.

### BRIEF DESCRIPTION OF THE DRAWINGS

Fig. 1 is a schematic cross-sectional view of a filter device F in use; and
Fig. 2 is an enlarged schematic cross-sectional view showing an example of a filter member 1.

### BEST MODE FOR CARRYING OUT THE INVENTION

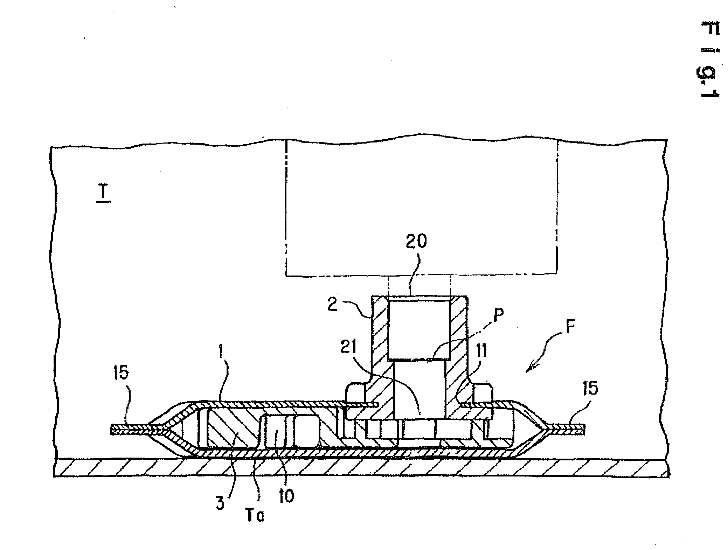

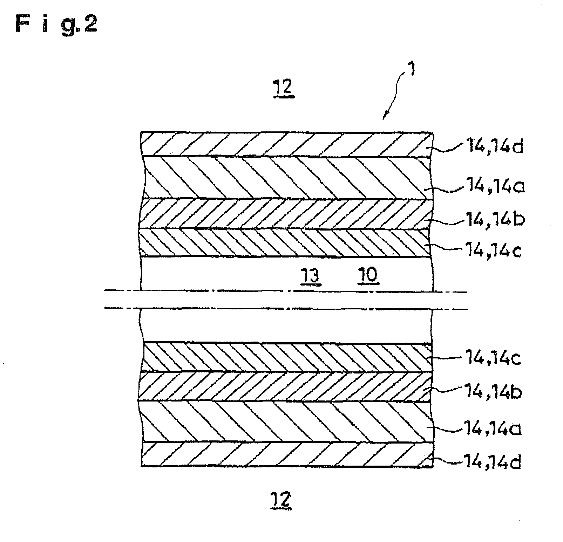

Now, one of the best modes for carrying out the present invention will be described, referring to Fig. 1 and Fig. 2.

Fig. 1 is a schematic view showing a state that a filter device F is attached to a fuel suction port P inside a fuel tank T. Fig. 2 is a schematic cross-sectional view showing an example of a filter member 1 forming the filter device F. (in Fig. 2, only the structures of upper and lower parts of the filter member 1 are shown in section, and a spacer 3 to be housed in the filter member 1 is omitted).

The filter device F according to the shown embodiment, which is directed to a fuel filter device, is attached to the fuel suction port P inside the fuel tank T of an automobile, a motorcycle or the like In order to prevent water and a foreign material from being mixed in the fuel forwarded toward an internal combustion engine through the fuel suction port P.

Typically, the filter device F is attached to the fuel suction port P of a suction pipe, which has the fuel suction port P disposed inside the fuel tank T.

The fuel is forwarded toward the internal combustion engine through the fuel suction port P by a fuel pump, which is disposed inside the fuel tank T or outside the fuel tank T,

The filter device F includes the filter member 1 in a bag-shape form. The filter device F is configured to be attached to the fuel suction port P in order that the filter device has an inner space 10 communicating with the fuel suction opening P.

More specifically, in the shown embodiment, the filter device F includes a plastic cylindrical socket member 2, which has an end portion 20 connected to the fuel suction opening P and the other end portion 21 connected to a communicating hole 11 formed in the filter member 1. The cylindrical socket member 2 allows the inner space 10 of the filter member 1 to communicate with the fuel suction opening P.

In the shown embodiment, the filter device F includes the spacer 3, which is housed in the filter member 1 to expand the filter member 1 in a bag-like shape all the time.

Specifically, in the shown embodiment, the spacer 3 has such a thickness that the spacer has an upper side contacting an inner side of an upper part of the bag-like filter member 1 and a lower side contacting an inner side of a lower part of the filter member 1. The spacer 3 is fitted in the filter member 1 to expand the filter member 1 in a bag-like shape all the time. The spacer 3 has a plurality of fuel passages (not shown in the drawings) formed to extend from the upper side to the under side thereof.

The filter member is formed of at least two filter media, which are stacked one after the other. At least one of the filter media is configured that the fuel passages have different cross-sectional areas at a primary side 12 and a secondary side 13 of the filter media 14 in order to serve as a multifunctional filter medium 14a having the function of stepwise capturing dust and dirt having different particle sizes. In Description, the primary side 12 of the filter media 14 means a side of the filter media 14 closer to the outer side of the filter member, i.e. a side (upstream side) of the filter media 14 where the fuel flows in, and the secondary side 13 of the filter media 14 means the other side of the filter media 14 closer to the inner side of the filter member, i.e. a side (downstream side) of the filter media 14 where the fuel flows out.

In accordance with the filter device F, such a single multifunctional filter medium 14a allows dust and dirt to be captured at respective different positions in the thickness direction thereof, the dust and dirt having different particle sizes and ranging from a coarse particle size to a fine particle size. Thus, it is possible to properly remove dust and dirt from sucked fuel in such a state that the filter member 1 is hardly clogged.

When the filter member 1 is formed in a bag-like shape by stacking a plurality of melt-bondable filter media 14 formed in a sheet-like or mat-like shape, folding the stacked media and melt-bonding, in a linear form or a band form, the other portions than the folded portion, or when the filter member 1 is formed in a bag-like shape by stacking two combinations of stacked filter media so as to face the inner side of one of the combinations to the inner side of the other combination, the melt-bonding operation can be carried out easily and properly with the stacking number of the filter media at the melt-bonded portions being minimized.

If at least two filter media 14, which have different cross-sectional areas in the fuel passages, i.e. different average opening sizes in the fine fuel passages, are stacked and melt-bonded together to form the filter member 1 in a bag-like shape, the stacking number of the filter media 14 at the melt-bonded portions becomes excessive, making it difficult to integrate the filter media by melt-bonding. In the filter device according to the embodiment, such a single multifunctional filter medium 14a allows the filter member 1 to be formed so as to be unlikely to be clogged with the melt-bonded portions being easily melt-bonded and integrated.

In the embodiment, the multifunctional filter medium 14a is formed of a non-woven fabric, and each of the fuel passages in the multifunctional filter medium 14a has a cross-sectional area gradually decreasing toward the secondary side 13 of the multifunctional filter medium 14a. By this arrangement, a portion of the multifunctional filter medium closer to the primary side 12, a portion of the multifunctional filter medium closer to the secondary side 13 and an intermediate portion of the multifunctional filter medium between both sides capture dust and dirt having a relatively coarse particle size, dust and dirt having a relatively fine particle size, and dust and dirt having an intermediate particle sizes at different positions, respectively, in the embodiment.

When the multifunctional filter medium 14a is produced by an air-laid method (also called air-lay or the like) as a dry method for producing a non-fabric, it is possible to obtain, at a relatively low cost, the non-fabric filter media 14 having a smooth density gradient and easy to supply, at a low cost, a filter device which has a high filtering accuracy and is unlikely to be clogged.

In the embodiment, the multifunctional filter medium 14a has a melt-blown filter medium 14b stacked on the secondary side 13, the melt-blown filter medium having a smaller average opening size than the multifunctional filter medium 14a.

Thus, it is possible to form the filter device having a long service life with the load borne by the main filter being minimized In the embodiment since the filter medium 14b formed of a melt-blown non-woven fabric serves as the main filter while the above-mentioned multifunctional filter medium 14a serves as a prefilter.

In the embodiment, the filter medium 14 that is disposed at the innermost position of the filter member 1 is formed of a filter medium 14c produced by a spun-bond method.

In this case, it is possible to easily keep the shape of the filter member 1 by giving a rigidity to the filter member 1 by the filter medium 14c produced by a spun-bond method. The spacer 3 may be configured so as to have contact with the filter medium 14c produced by a spun-bond method without having contact with the melt-blown filter medium 14.

In the embodiment, the filter medium 14 that is disposed at the outermost position of the filter member 1 is formed of a mesh fabric 14d. In this case, the mesh fabric 14d disposed at the outermost position of the filter member 1 separates water from a fuel containing the water with the result that the water is prevented from entering the filter member 1. Further, even if the lower part of the filter member 1 scrapes against an inner bottom wall Ta of the fuel tank T, being affected by, e.g. an inward or outward movement of the inner bottom wall Ta of the fuel tank T due to a pressure change in the filter member 1 or another factor (e.g. expansion and contraction of the fuel tank T), the multifunctional filter medium 14a formed of a non-woven fabric is prevented from being directly adversely affected.

The mesh fabric 14d is typically formed by weaving synthetic fibers, such as nylon fibers, polyethylene fibers and polypropylene fibers, so as to have a fine enough mesh to separate water from oil. The mesh fabric 14d may be formed of, for example, Hollander weave, plain weave, twill weave and satin weave.

The respective filter media 14 forming the filter member 1 may be formed of the same synthetic resin as one another. For example, the respective layers may be formed of polypropylene or nylon.

In such a case, the filter member 1 may be formed In a bag-like shape by stacking the respective filter media 14 and integrating the filter media with good adhesion by melt-bonding.

In the embodiment shown in Fig. 2, the filter member 1 is formed of the mesh fabric 14d serving as the outermost layer thereof, the spun-bonded filter medium 14c serving as the innermost layer thereof, the prefilter (the multifunctional filter medium 14a) and the main filter (the filter medium 14b produced by a melt-blowing method) wherein the prefilter and the main filter are interposed between both of the outermost layer and the innermost layer so that the prefilter is disposed at a position closer to the mesh fabric 14d while the main filter is disposed at a position closer to the spun-bonded filter medium 14c.

The filter member 1 according to the shown embodiment may be formed by stacking the filter media 14 and folding the filter media so as to interpose the spacer 3 between the folded parts with the spun-bond filter medium 14c facing inward, followed by Integrating one of the folded part and the other part at heat-sealed portions (melt-bonded portions 15) extending on all the sides except the folded side or at a position located inwardly along all the sides except the folded side. The communicating hole 11, which is coupled with the socket member 2, is formed in the stacked four filter media 14 before folding the filter media.

Alternatively, the filter member 1 according to the shown embodiment may be formed by stacking four filter media 14 as described above to form a first combination of filter media, stacking four filter media 14 as described above to form a second combination of filter media, stacking the first and second combinations of filter media so as to interpose the spacer 3 between both combinations with the spun-bond filter medium 14c of the first combination and the spun-bond filter medium 14c of the second combination facing each other, followed by integrating both combinations at a heat-sealed portion around the outer periphery of the interposed spacer 3. The communicating hole 11, which is coupled with the socket member 2, is formed in the first and second combinations in advance.

Before the filter member 1 is formed, the respective filter media 14 forming the filter member 1 may be integrated at other portions than the heat-sealed portions by properly melt-bonding at several spots.

An unnecessary portion of the filter member, which is located outside the heat-sealed portion 15 may be removed to trim the filter member 1 as needed.

The entire disclosure of Japanese Patent Application No. 2007-002491 filed on January 10, 2007 including specification, claims, drawings and summary are incorporated herein by reference in its entirety.

## Claims

1. A fuel filter device (F), which includes a filter member (1) formed in a bag-like shape, and which is adapted to be attached to a fuel suction opening (P) inside a fuel tank (T) so as to communicate an inner space (10) of the filter member (1) with the fuel suction opening (P); comprising
the filter member (1) being formed by stacking at least two filter media; wherein
at least one of the filter media (14a) is a single filter medium configured such that fuel passages in the at least one filter medium have different cross-sectional areas at a primary side (12) and a secondary side (13) of the at least one filter medium in order to serve as a multifunctional filter medium (14a) having a function of stepwise capturing dust and dirt having different particle sizes;
the multifunctional filter medium (14a) is formed of a medium produced by an air-laid method; and
the multifunctional filter medium (14a) has a melt-blown filter medium (14b) stacked on the secondary side (13), the melt-blown filter medium (14b) having a smaller average opening size than the multifunctional filter medium (14a).

2. The fuel filter device according to Claim 1, wherein each of the fuel passages in the multifunctional filter medium (14a) has a cross-sectional area gradually decreasing toward the secondary side (13) of the multifunctional filter medium (14a).

3. The fuel filter device according to any one of Claims 1 to 2, wherein a filter medium (14c) that is located at an innermost position of the filter member (1) is formed of a filter medium produced by a spun-bond method.

4. The fuel filter device according to any one of Claims 1 to 3, wherein a filter medium (14d) that is located at an outermost position of the filter member (1) is formed of a mesh fabric.

## Patentansprüche

1. Kraftstofffiltervorrichtung (F), die ein in einer beutelförmigen Form ausgebildetes Filterelement (1) aufweist und eingerichtet ist, an einer Kraftstoffansaugöffnung (P) innerhalb eines Kraftstofftanks (T) angebracht zu werden, um einen Innenraum (10) des Filterelements (1) mit der Kraftstoffansaugöffnung (P) zu verbinden; die aufweist das Filterelement (1), das durch Aufeinanderschichten von mindestens zwei Filtermedien gebildet wird; wobei
mindestens eines der Filtermedien (14a) ein einzelnes Filtermedium ist, das so konfiguriert ist, dass Kraftstoffkanäle in dem mindestens einen Filtermedium auf einer Primärseite (12) und einer Sekundärseite (13) des mindestens einen Filtermediums unterschiedliche Querschnittsflächen aufweisen, um als ein Mehrzweckfiltermedium (14a) zu dienen, das eine Funktion aufweist, stufenweise Staub und Schmutz mit unterschiedlichen Teilchengrößen einzufangen;
das Mehrzweckfiltermedium (14a) aus einem Medium ausgebildet ist, das durch ein Luftlegeverfahren hergestellt wird; und
das Mehrzweckfiltermedium (14a) ein schmelzgeblasenes Filtermedium (14b) aufweist, das auf die Sekundärseite (13) geschichtet ist, wobei das schmelzgeblasene Filtermedium (14b) eine kleinere durchschnittliche Öffnungsgröße als das Mehrzweckfiltermedium (14a) aufweist.

2. Kraftstofffiltervorrichtung nach Anspruch 1, wobei jeder der Kraftstoffkanäle im Mehrzweckfiltermedium (14a) eine Querschnittsfläche aufweist, die zur Sekundärseite (13) des Mehrzweckfiltermediums (14a) allmählich abnimmt.

3. Kraftstofffiltervorrichtung nach einem der Ansprüche 1 bis 2, wobei ein Filtermedium (14c), das sich an der innersten Position des Filterelements (1) befindet, aus einem Filtermedium ausgebildet ist, das durch ein Spinnvliesverfahren hergestellt wird.

4. Kraftstofffiltervorrichtung, nach einem der Ansprüche 1 bis 3, wobei ein Filtermedium (14d), das sich an der äußersten Position des Filterelements (1) befindet, aus einem Maschengewebe ausgebildet ist.

## Revendications

1. Dispositif de filtre à carburant (F) comprenant un élément de filtre (1) en forme de sac, et prévu pour être fixé à une ouverture d'aspiration de carburant (P) à l'intérieur d'un réservoir de carburant (T) de manière à relier un espace intérieur (10) de l'élément de filtre (1) à l'ouverture d'aspiration de carburant (P) ; comprenant l'élément de filtre (1) formé par empilement d'au moins deux supports filtrants ;
au moins un des supports filtrants (14a) étant un support filtrant simple prévu de telle manière que des passages de carburant dans le ou les supports filtrants aient des surfaces de section transversale différentes sur un côté primaire (12) et sur un côté secondaire (13) du ou des supports filtrants pour servir de support filtrant polyvalent (14a) présentant une fonction de retenue progressive de poussières et de saletés de différentes grosseurs de particules ;
le support filtrant polyvalent (14a) étant formé d'un support fabriqué par un procédé à jet d' air ; et
le support filtrant polyvalent (14a) comporte un support filtrant (14b) soufflé à l'état de fusion empilé sur le côté secondaire (13), ledit support filtrant (14b) soufflé à l'état de fusion présentant une grandeur d'ouverture moyenne inférieure au support filtrant polyvalent (14a).

2. Dispositif de filtre à carburant selon la revendication 1, où chaque passage de fuel dans le support filtrant polyvalent (14a) a une surface de section transversale diminuant graduellement vers le côté secondaire (13) du support filtrant polyvalent (14a).

3. Dispositif de filtre à carburant selon la revendication 1 ou la revendication 2, où un support filtrant (14c) disposé le plus à l'intérieur de l'élément de filtre (1) est constitué d'un support filtrant fabriqué par un procédé de filage-liage.

4. Dispositif de filtre à carburant selon l'une des revendications 1 à 3, où un support filtrant (14d) disposé ultrapériphériquement à l'élément de filtre (1) est constitué d'un tissu à mailles.
